# EUROPÄISCHE PATENTSCHRIFT

(11) **EP 3 497 057 B1**
(45) Veröffentlichungstag und Bekanntmachung des Hinweises auf die Patenterteilung: **30.09.2020**
(21) Anmeldenummer: 17754113.3
(22) Anmeldetag: 03.08.2017
(51) Int. Cl.: C01C 1/04, B01J 8/04, B01J 19/24, F28D 9/00

(54) **VERFAHREN ZUR HERSTELLUNG VON AMMONIAK SOWIE AMMONIAKSYNTHESEKONVERTER**
METHOD FOR PRODUCING AMMONIA, AND AMMONIA SYNTHESIS CONVERTER
PROCÉDÉ DE PRODUCTION D'AMMONIAC ET CONVERTISSEUR DE SYNTHÈSE D'AMMONIAC

(30) Priorität: 09.08.2016 DE 102016114713; 09.08.2016 DE 102016114710; 09.08.2016 DE 102016114711; 09.11.2016 DE 102016221967
(43) Veröffentlichungstag der Anmeldung: 19.06.2019
(73) Patentinhaber: thyssenkrupp Industrial Solutions AG, 45143 Essen (DE); thyssenkrupp AG, 45143 Essen (DE)
(72) Erfinder: GORVAL, Evgeni, 44135 Dortmund (DE); JOHANNING, Joachim, 46045 Oberhausen (DE); MICHEL, Reinhard, 44797 Bochum (DE)
(74) Vertreter: thyssenkrupp Intellectual Property GmbH
(86) Internationale Anmeldenummer: PCT/EP2017/069677
(87) Internationale Veröffentlichungsnummer: WO 2018/029081

(56) Entgegenhaltungen:
- US-A- 4 230 669
- US-A- 4 341 737
- US-A- 6 015 537
- US-A1- 2010 129 283
- Universal Hydraulik Gmbh: "Platten-oder Rohrbündel", , 1. Januar 2002 (2002-01-01), Seiten 1-4, XP055415708, Gefunden im Internet: URL:http://www.universalhydraulik.de/tl_fi les/docs/fluid2_d.pdf?phpMyAdmin=jF9wMGm6t Gmy6sT,x8OXG3SD6d5 [gefunden am 2017-10-13]

## Beschreibung

Die vorliegende Erfindung betrifft ein Verfahren zur Herstellung von Ammoniak in einem Ammoniaksynthesekonverter, bei dem man einen Eduktgasstrom zunächst durch ein erstes Katalysatorbett leitet, in dem eine Reaktion der Eduktgase stattfindet, wobei dem ersten Katalysatorbett ein Wärmetauscher zugeordnet ist und man danach den Prozessgasstrom durch ein zweites Katalysatorbett leitet, in dem eine weitere Reaktion der Eduktgase stattfindet, wobei dem zweiten Katalysatorbett ein weiterer Wärmetauscher zugeordnet ist, wobei man den Eduktgasstrom dem Ammoniaksynthesekonverter in mindestens zwei Teilströmen über voneinander getrennte Einlässe zuführt, um die Temperatur der Prozessgasströme im Ammoniaksynthesekonverter zu beeinflussen und wobei man mindestens einen Teilstrom der Eduktgase als Kühlmedium durch einen der Wärmetauscher strömen lässt, um einen Wärmetausch mit einem den Wärmetauscher durchströmenden durch die Reaktion aufgeheizten Prozessgasstrom zu bewirken, bevor dieser Teilstrom mit einem anderen oder ggf. mehreren anderen Teilströmen der Eduktgase vereinigt wird, wobei man den aus dem Wärmetauscher nach dem zweiten Katalysatorbett ausströmenden Prozessgasstrom anschließend durch ein drittes Katalysatorbett leitet, wobei man einen zweiten Eduktgasstrom, welcher einen zweiten Teilstrom der Eduktgase darstellt, durch einen zweiten Einlass dem Ammoniaksynthesekonverter zuführt, dann im Ammoniaksynthesekonverter als Kühlmittel durch den zweiten Wärmetauscher leitet und vorwärmt und dann dem ersten Katalysatorbett zuführt, dadurch gekennzeichnet, dass man einen dritten Eduktgasstrom, welcher einen dritten Teilstrom der Eduktgase darstellt, in einem oberen Bereich durch einen dritten Einlass dem Ammoniaksynthesekonverter zuführt, dann im Ammoniaksynthesekonverter als Kühlmittel durch den ersten Wärmetauscher leitet und vorwärmt und dann dem ersten Katalysatorbett zuführt, wobei man einen Eduktgasstrom in einem dritten Wärmetauscher vorwärmt, bevor der Eduktgasstrom durch das erste Katalysatorbett geleitet wird und wobei der dritte Wärmetauscher als Plattenwärmetauscher ausgebildet ist.

Gegenstand der vorliegenden Erfindung ist weiterhin ein Ammoniaksynthesekonverter gemäß Anspruch 10, welcher für die Herstellung von Ammoniak nach dem vorgenannten Verfahren geeignet ist.

Die Volumina der Druckbehälter für Ammoniak-Synthesereaktoren teilen sich prinzipiell auf die von den Katalysatorbetten, den Wärmetauschern und den Gaskanälen beanspruchten Teilvolumina auf. Bedingt durch die in der Regel verhältnismäßig hohen Arbeitsdrücke der Synthesereaktoren sind die Druckbehälter teure Komponenten. Eine Minimierung der spezifisch entsprechend teuren Druckbehältervolumina ist deshalb generell anzustreben.

Aus der US-Patentschrift US 7,780,925 B2 ist ein katalytischer Festbettreaktor für heterogene katalytische Reaktionen bekannt, welcher u.a. auch für die Ammoniaksynthese einsetzbar ist. Der dort beschriebene Reaktor umfasst ein erstes Katalysatorbett, in dem ein Wärmetauscher angeordnet ist, der als Plattenwärmetauscher ausgebildet ist. Unterhalb des ersten Katalysatorbetts ist ein zweites Katalysatorbett mit einem zweiten Plattenwärmetauscher angeordnet. In seinem oberen Bereich weist dieser Reaktor eine Verjüngung im Durchmesser auf, so dass eine Art Flaschenhals ausgebildet ist. In diesem verjüngten oberen Bereich ist ein dritter Wärmetauscher angeordnet, wobei es sich hier jedoch um einen Rohrbündelwärmetauscher handelt. Die chemische Reaktion findet hier in nur zwei Katalysatorbetten statt.

In Situationen, in denen ein Austausch der Konvertereinsätze wegen des Erreichens der Lebensdauergrenze erforderlich wird, ist oft auch eine Kapazitätssteigerung der Anlage erwünscht. Ammoniaksynthesekonverter, wie sie aus der zuvor erwähnten US-Patentschrift 7,780,925 B2 bekannt sind, haben eine flaschenartige Form mit einem im Durchmesser reduzierten Zugang am Kopf, so dass man den Konvertereinsatz als ganze Einheit nicht austauschen kann. Eine Erhöhung des Katalysatorvolumens bei diesem Konvertertyp ist schwierig, da dafür Schweißarbeiten innerhalb des Konverters erforderlich wären. Diese Schweißarbeiten wären extrem risikobehaftet, da die Einsätze in den Konvertern über lange Zeiträume in einer stark nitrierenden Atmosphäre im Dauerbetrieb waren. Darüber hinaus würde ein Umbau des Konvertereinsatzes zu einem längeren Stillstand der Anlage und damit zu einem erheblichen Produktionsausfall führen, wodurch die Wirtschaftlichkeit der Neuausrüstungsmaßnahme ("Revamp") der Anlage insgesamt gefährdet wäre. Damit ein Umbaukonzept einer Anlage wirtschaftlich bleibt, sollte man auf größere Umbauarbeiten innerhalb des Konverters sowie auf längere und komplizierte Schweißarbeiten verzichten.

Weiterhin nachteilig ist bei diesen Konvertern, an denen oft bereits Maßnahmen zur Erhöhung der Kapazität durchgeführt worden sind, dass der bereits hohe Druckverlust eine weitere Erhöhung der Prozessgasmenge unmöglich macht.

Die bei Ammoniaksynthesekonvertern verwendeten Rohrbündelwärmetauscher beanspruchen ein relativ großes Volumen pro übertragener Wärmeleistung (geringe Wärmestromdichte), so dass dadurch weniger Volumen für das Katalysatorbett zur Verfügung steht. Ein Wärmetauscher, der ein geringeres Volumen bei der gegebenen Wärmeleistung benötigt, macht es möglich, das frei gewordene Volumen für zusätzlichen Katalysator zu verwenden und so die Produktion zu steigern. Wenn es andererseits gelingt, den Druckverlust der Wärmetauscher bei unverändertem Volumen zu reduzieren, kann man die Kapazitätserhöhung allein durch eine Erhöhung der Gasmenge und somit ohne Erhöhung des Katalysatorvolumens erreichen.

Bauartbedingt ist die spezifische Wärmeübertragungsleistung von Rohrbündel-Wärmetauschern begrenzt und wird von anderen Bauarten wie z.B. Plattenwärmetauschern deutlich übertroffen. Im Gegensatz zu Rohrbündel-Wärmetauschern sind Plattenwärmetauscher allerdings hinsichtlich der zulässigen Druckdifferenz zwischen den beiden Stoffströmen auf etwa 20 bar begrenzt. Da die Druckdifferenz bei Einsatz des Plattenwärmetauschers in einem Ammoniaksynthesekonverter der hier beschriebenen Art auf die Druckverluste in den Katalysatorbetten und Strömungskanälen beschränkt ist und unter etwa 5 bar liegt, ist hier der Einsatz von Plattenwärmetauschern grundsätzlich möglich.

Standard-Plattenwärmetauscher werden üblicherweise mit einer Vielzahl paralleler rechteckiger Platten mit vier Zuleitungsrohren (je zwei für kalten und warmen Strom) ausgeführt. Dabei sind die Platten nicht eben, sondern haben eine komplexe gewellte Form, meist im Fischgrätmuster, um die Wärmeübertragungsfläche zu erhöhen und den Wärmeübergang durch höheren Turbulenzgrad zu verbessern sowie die mechanische Abstützung der in der Regel recht dünnen Platten untereinander zu gewährleisten. Weniger verbreitet, aber grundsätzlich bekannt, sind runde Plattenwärmetauscher.

Bei dem aus der US-Patentschrift 7,780,925 B2 bekannten Ammoniaksynthesekonverter sind für das erste und das zweite Katalysatorbett jeweils Plattenwärmetauscher vorgesehen, welche innerhalb des diesem zugeordneten Katalysatorbettes liegen. Dies hat zur Folge, dass in dem Katalysatorbett eine Kühlung durch Wärmetausch stattfindet, so dass im Prinzip eine isotherme Reaktionsführung vorliegt.

Aus der EP 1 707 259 A1 ist ein Verfahren zur Synthese von Methanol durch heterogene Katalyse bekannt, bei dem man das Eduktgasgemisch nacheinander durch mehrere Katalysatorbetten leitet, welche von dem Prozessgasstrom in axialer Richtung durchströmt werden. Zwischen den Katalysatorbetten findet jeweils eine Kühlung des Prozessgasstroms statt. Nach dem axialen Durchtritt durch drei Katalysatorbetten strömt das Prozessgas wiederum axial durch ein viertes Katalysatorbett, wobei in diesem vierten Katalysatorbett eine Anzahl von Plattenwärmetauschern angeordnet ist. Da diese Plattenwärmetauscher innerhalb des vierten Katalysatorbetts liegen, ist auch hier eine isotherme Reaktionsführung gegeben. Bei diesem bekannten Verfahren geht man somit so vor, dass man zunächst die Reaktion in kleineren Katalysatorbetten im Wesentlichen adiabat führt und danach in einem weiteren Katalysatorbett eine isotherme Reaktion anschließt.

Aus der US 6,015,537 A ist ein Ammoniakreaktor mit drei Katalysatorbetten und drei Wärmetauschern bekannt. In dieser Schrift wird ein Verfahren zur Herstellung von Ammoniak beschrieben, bei dem der Eduktgasstrom in drei Teilströme aufgeteilt wird, wobei einer dieser Teilströme zur Kühlung durch einen der Wärmetauscher geleitet wird, wobei der Produktstrom aus dem zweiten Ammoniakkonverter gekühlt wird. Die drei Teilströme werden dann wieder zusammengeführt und in das erste Katalysatorbett geleitet. Außerdem wird der aus dem Wärmetauscher nach dem zweiten Katalysatorbett austretende Strom anschließend in ein drittes Katalysatorbett eingeleitet. Bei diesem bekannten Verfahren werden zwar auch drei Teilströme verwendet, von denen der nicht vorgewärmte in das erste Katalysatorbett geleitet wird und der zweite durch den zweiten Wärmetauscher geleitet wird, dann aber in sukzessiver Strömung auch noch durch den ersten Wärmetauscher und dann in das erste Katalysatorbett, so dass dieser zweite Teilstrom sich stärker aufwärmt. Der dritte Teilstrom wird durch den dritten Wärmetauscher geleitet und dann auch in das erste Katalysatorbett eingeleitet.

Aus der US 2010/0129283 A1 ist ein chemischer Reaktor für katalytische Reaktionen mit im Wesentlichen zylindrischer Geometrie bekannt, welcher zwei ringförmige Katalysatorbetten aufweist sowie diesen jeweils zugeordnete Plattenwärmetauscher. Hier befinden sich zwar die Plattenwärmetauscher zwischen der Außenwand des Reaktors und einer konzentrisch dazu verlaufenden Innenwand, aber die Plattenwärmetauscher liegen innerhalb der Katalysatorbetten, so dass die dort reagierenden Reaktionsgase bereits während der Reaktion abgekühlt werden. In diesem Fall spricht man von einem pseudoisothermen Katalysatorbett, im Gegensatz zu einer adiabatischen Reaktionsführung. Die Plattenwärmetauscher sind hier so ausgerichtet, dass die Plattenebene sich in axialer Richtung des Behälters erstreckt, wobei die Platten des Wärmetauschers radial im Behälter von außen nach innen hin ausgerichtet sind.

Die Aufgabe der vorliegenden Erfindung besteht darin, ein Verfahren zur Herstellung von Ammoniak in einem Ammoniaksynthesekonverter mit den Merkmalen der eingangs genannten Gattung zur Verfügung zu stellen, in dem bei vergleichbarem Konvertervolumen eine Kapazitätssteigerung gegenüber bekannten Konvertern erreichbar ist. Aufgabe der Erfindung ist es weiterhin, einen für dieses Verfahren geeigneten Ammoniaksynthesekonverter zur Verfügung zu stellen.

Die Lösung der vorgenannten Aufgabe liefert ein Verfahren der eingangs genannten Art mit den Merkmalen des Anspruchs 1 bzw. ein Ammoniaksynthesekonverter mit den Merkmalen des Anspruchs 10.

Erfindungsgemäß ist vorgesehen, dass man einen dritten Eduktgasstrom, welcher einen dritten Teilstrom der Eduktgase darstellt, in einem oberen Bereich durch einen dritten Einlass dem Ammoniaksynthesekonverter zuführt, dann im Ammoniaksynthesekonverter als Kühlmittel durch den ersten Wärmetauscher leitet und vorwärmt und dann dem ersten Katalysatorbett zuführt, wobei man den Eduktgasstrom in einem dritten Wärmetauscher vorwärmt, bevor der Eduktgasstrom durch das erste Katalysatorbett geleitet wird, wobei der dritte Wärmetauscher als Plattenwärmetauscher ausgebildet ist. Dies schafft die Möglichkeit einen effektiven und platzsparenden Plattenwärmetauscher in dem verjüngten Kopfbereich des Ammoniaksynthesekonverters unterzubringen, in dem nur ein reduzierter Bauraum zur Verfügung steht.

Vorteilhaft ist im Rahmen der vorliegenden Erfindung der Einsatz besonders platzsparender runder Plattenwärmetauscher mit direkter seitlicher Einströmung des heißen Gases, wie sie beispielsweise in der nicht vorveröffentlichten älteren Anmeldung DE 2016 114 713.3 vom 09. 08. 2016 beschrieben werden. Diese platzsparenden Plattenwärmetauscher füllen das gesamte zur Verfügung stehende Volumen, so dass man den Druckverlust durch die Vergrößerung der Abstände zwischen den einzelnen Platten deutlich reduzieren kann. Es sei hier darauf hingewiesen, dass der Druckverlust in den Wärmetauschern gewöhnlich den überwiegenden Teil des gesamten Druckverlustes in dem Ammoniak-Konvertereinsatz ausmacht. Mit reduziertem Druckverlust kann die Feedmenge (Menge des Speisestroms) erhöht werden, was zwar die Ammoniak-Austrittskonzentration senkt, aber durch die insgesamt größere Gasmenge die absolute Menge an synthetisiertem Ammoniak erhöht. Der Druckverlust steigt zwar auch durch die Erhöhung der Gasmenge, bleibt aber deutlich unter den kritischen Werten.

Bei den im Rahmen der vorliegenden Erfindung verwendeten Plattenwärmetauschern handelt es sich bevorzugt um besonders platzsparende runde Wärmetauscher der vorgenannten Art. Diese haben den Vorteil, dass der Prozessgasstrom zunächst das erste Katalysatorbett im Wesentlichen in radialer Richtung vollständig durchströmen kann und danach den diesem Katalysatorbett zugeordneten ersten Wärmetauscher durchströmt. Der Plattenwärmetauscher reduziert somit nicht das Volumen des Katalysatorbetts, da er anders als im Stand der Technik nicht in das Katalysatorbett hineinragt, sondern konzentrisch radial innenseitig zu dem Katalysatorbett angeordnet ist, so dass das Katalysatorbett den Wärmetauscher ringförmig außenseitig umgibt.

Gemäß einer bevorzugten Weiterbildung der vorliegenden Erfindung ist entsprechend vorgesehen, dass der Prozessgasstrom zunächst das zweite Katalysatorbett im Wesentlichen in radialer Richtung vollständig durchströmt und danach einen diesem Katalysatorbett zugeordneten zweiten Wärmetauscher durchströmt.

Gemäß einer bevorzugten Weiterbildung der vorliegenden Erfindung strömt der Prozessgasstrom in den ersten und/oder den zweiten Wärmetauscher im Wesentlichen in radialer Richtung ein und strömt in axialer Richtung aus dem jeweiligen Wärmetauscher aus. Dies ist durch eine spezifische kompakte und platzsparende Bauweise der Plattenwärmetauscher möglich. Im Wesentlichen axial aus dem ersten Wärmetauscher ausströmendes Prozessgas kann beispielsweise in einem Zwischenraum zwischen dem ersten Katalysatorbett und dem zweiten Katalysatorbett wieder radial nach außen strömen, so dass der Prozessgasstrom dann in das zweite Katalysatorbett wieder von radial außen eintritt und dieses von außen nach innen durchströmt, um danach nach Aufheizung durch die Reaktion im Katalysatorbett durch den zweiten Wärmetauscher zu strömen.

Eine bevorzugte Variante des erfindungsgemäßen Verfahrens sieht vor, dass der Prozessgasstrom zunächst ein erstes Katalysatorbett im Wesentlichen radial durchströmt, nach Austritt aus dem ersten Katalysatorbett seitlich in einen ersten Wärmetauscher einströmt, das Prozessgas danach ein zweites Katalysatorbett im Wesentlichen radial durchströmt, nach Austritt aus dem zweiten Katalysatorbett seitlich in einen zweiten Wärmetauscher einströmt, das Prozessgas danach ein drittes Katalysatorbett im Wesentlichen radial durchströmt und das Prozessgas nach Austritt aus dem dritten Katalysatorbett einen als Plattenwärmetauscher ausgebildeten dritten Wärmetauscher durchströmt, welcher im oberen Bereich des Druckbehälters, insbesondere in einem im Durchmesser verjüngten Kopfbereich des Druckbehälters, oberhalb des ersten Katalysatorbetts angeordnet ist.

Gemäß einer bevorzugten Weiterbildung des erfindungsgemäßen Verfahrens führt man einen ersten Eduktgasstrom, welcher einen ersten Teilstrom der Eduktgase darstellt, in einem unteren Bereich durch einen ersten Einlass dem Ammoniaksynthesekonverter zu, führt diesen ersten Teilstrom dann im Ammoniaksynthesekonverter in einem radial äußeren Bereich nach oben, leitet ihn dann durch den dritten Wärmetauscher und wärmt ihn so vor und führt ihn dann dem ersten Katalysatorbett zu.

Weiterhin führt man einen zweiten Eduktgasstrom, welcher einen zweiten Teilstrom der Eduktgase darstellt, beispielsweise in einem mittleren Bereich durch einen zweiten Einlass dem Ammoniaksynthesekonverter zu, leitet ihn dann im Ammoniaksynthesekonverter als Kühlmittel durch den zweiten Wärmetauscher, wärmt ihn so vor und führt ihn dann dem ersten Katalysatorbett zu. Weiterhin führt man einen dritten Eduktgasstrom, welcher einen dritten Teilstrom der Eduktgase darstellt, in einem oberen Bereich durch einen dritten Einlass dem Ammoniaksynthesekonverter zu, leitet ihn dann im Ammoniaksynthesekonverter als Kühlmittel durch den ersten Wärmetauscher und wärmt ihn so vor und führt ihn dann dem ersten Katalysatorbett zu.

Das relative Volumenverhältnis der vorgenannten drei Teilströme ist je nach Anwendungsfall über weite Bereiche variabel.

Auf diese Weise leitet man bevorzugt wenigstens drei verschiedene Teilströme der Eduktgase in drei verschiedenen Bereichen in den Ammoniaksynthesekonverter ein und man leitet alle drei Teilströme der Eduktgase erst durch das erste Katalysatorbett, danach durch das zweite Katalysatorbett und danach durch das dritte Katalysatorbett, so dass alle Teilströme jeweils an der Reaktion in allen drei Katalysatorbetten teilnehmen.

Die vorgenannte bevorzugte erfindungsgemäße Lösung hat aufgrund ihrer spezifischen Stromführung des Prozessgasstroms im Ammoniakkonverter einen weiteren Vorteil gegenüber vorbekannten Lösungsansätzen, bei denen ein vergleichsweise großer Anteil der kalten Eduktgase (beispielsweise in einer Größenordnung von etwa 25 % des gesamten zugeführten Eduktgasstroms) zur Abkühlung des Produktgases nach dem ersten Katalysatorbett durch direkte Zumischung (sogenannter Quench) genutzt wird. Dies hat nämlich zur Folge, dass das durch Reaktion im ersten Katalysatorbett entstandene Produktgas durch den zugeführten frischen Quenchgasstrom verdünnt wird. Die erfindungsgemäße Lösung ermöglicht es, diesen Anteil des Quenchgases deutlich zu reduzieren. Die als Hauptstrom in den Ammoniaksynthesekonverter eingeleiteten frischen Eduktgase werden nun zunächst in einem Wärmetauscher indirekt vorgewärmt und nach der Vermischung mit den "kalten" Teilströmen, die ebenfalls jeweils durch einen Wärmetauscher geleitet wurden, wird der vereinigte Prozessgasstrom dem ersten Katalysatorbett zugeführt.

Eine weitere bevorzugte Weiterbildung des erfindungsgemäßen Verfahrens sieht vor, dass man einen Teilgasstrom, den man als Kühlmittel durch den zweiten Wärmetauscher leitet, anschließend durch die Austrittsports des Wärmetauschfluids des ersten Wärmetauschers leitet und mit dem Strom des austretenden Wärmetauschfluids des ersten Wärmtauschers vereint. Diese Maßnahme erspart Platz für weitere Zuleitungswege und verbessert darüber hinaus die Vermischung der Teilströme vor dem Eintritt des Eduktgasstroms in das erste Katalysatorbett.

Gegenstand der vorliegenden Erfindung ist weiterhin ein Ammoniaksynthesekonverter nach dem Oberbegriff des Anspruchs 10. Dieser umfasst einen Druckbehälter, ein erstes ringförmig ausgebildetes Katalysatorbett in diesem Druckbehälter sowie wenigstens einen ersten diesem Katalysatorbett zugeordneten Wärmetauscher im Bereich zwischen dem ersten Katalysatorbett und einer Innenwand des Druckbehälters, weiterhin umfasst dieser ein zweites ringförmig ausgebildetes Katalysatorbett in diesem Druckbehälter sowie wenigstens einen zweiten diesem Katalysatorbett zugeordneten Wärmetauscher im Bereich zwischen dem zweiten Katalysatorbett und einer Innenwand des Druckbehälters, wobei der erste und der zweite Wärmetauscher jeweils als Plattenwärmetauscher ausgebildet sind, wobei wenigstens ein dritter Wärmetauscher vorgesehen ist, welcher in Strömungsrichtung des in den Druckbehälter einströmenden Eduktgasstroms gesehen dem ersten Katalysatorbett vorgeschaltet ist und wobei erfindungsgemäß das erste und das zweite Katalysatorbett ringförmig ausgebildet sind und der erste und der zweite Wärmetauscher jeweils als Plattenwärmetauscher ausgebildet sind und auch der dritte Wärmetauscher als Plattenwärmetauscher ausgebildet ist, wobei der dritte Wärmetauscher im oberen Bereich des Druckbehälters oberhalb des ersten Katalysatorbetts angeordnet ist.

Außerdem umfasst der Ammoniaksynthesekonverter ein drittes Katalysatorbett, welches im Strömungsweg des Prozessgasstroms dem zweiten Katalysatorbett und dem zweiten Wärmetauscher nachgeschaltet ist.

Dieses dritte Katalysatorbett erstreckt sich bevorzugt im Ammoniaksynthesekonverter weiter nach radial innen als die beiden anderen Katalysatorbetten. Insbesondere ist auf der Höhe des dritten Katalyatorbettes kein weiterer Wärmetauscher vorgesehen, so dass die radiale Erstreckung des dritten Katalysatorbettes bis nahezu zur Behältermitte reichen kann und somit dieses Katalysatorbett ein größeres Volumen aufweisen kann. Eine Abkühlung in gewissem Umfang erfahren die aus dem dritten Katalysatorbett austretenden Produktgase dennoch, wenn sie, wie bevorzugt im erfindungsgemäßen Verfahren vorgesehen, vor dem ausströmen aus dem Konverter durch den dritten Plattenwärmetauscher geleitet werden, im Gegenstrom zu dem einströmenden Hauptgasstrom der Eduktgase, die hier vorgewärmt werden.

Vorzugsweise ist dabei der Einlass für den Eduktgasstrom im unteren Bereich des Druckbehälters angeordnet. Bei dieser Konzeption werden die unten in den Konverter eintretenden Eduktgase zunächst außerhalb des Reaktorraums im Konverter nach oben geleitet und strömen dann von oben her durch den dort vorgesehenen dritten Plattenwärmetauscher, bevor sie in das erste Katalysatorbett eintreten.

Vorzugsweise ist das zweite Katalysatorbett im Druckbehälter unterhalb des ersten Katalysatorbetts angeordnet und das dritte Katalysatorbett ist wiederum unterhalb des zweiten Katalysatorbetts und im unteren Bereich des Behälters angeordnet.

Vorzugsweise ist eine axiale mittige Rohrleitung oder ein axiales mittiges Rohrleitungssystem im Behälter angeordnet, in welches der Produktgasstrom nach Durchtritt durch das dritte Katalysatorbett von unten her einströmt und welches einen Auslass für einen Produktgasstrom im oberen Bereich des Behälters aufweist. Der Behälter hat so eine kompakte Bauweise. Das unten einströmende Eduktgas (bzw. dessen Hauptstrom) strömt zunächst außerhalb der Katalysatorbetten nach oben, durchströmt dann im Innenbereich alle drei Katalysatorbetten von oben nach unten und erfährt danach wiederum eine Strömungsumlenkung und strömt durch eine etwa mittige Rohrleitung von unten nach oben, wo es aus dem Konverter austritt.

Die vorgenannte axiale mittige Rohrleitung für den Produktgasstrom ist dann im oberen Bereich des Konverters und in ihrem Ausströmbereich durch den dritten Wärmetauscher hindurchgeführt, bevor sie aus dem Konverter austritt.

Eine bevorzugte konstruktive Ausgestaltung des erfindungsgemäßen Ammoniaksynthesekonverters sieht vor, dass der dritte Wärmetauscher in einem oberen im Querschnitt verengten Bereich des Druckbehälters angeordnet ist. Diese Querschnittsverengung ist bei bestimmten Konvertertypen vorhanden und kann gemäß der Erfindung für die Unterbringung des dritten Plattenwärmetauschers genutzt werden. Die Katalysatorbetten, von denen das erste und das zweite bevorzugt jeweils einen Plattenwärmetauscher ringförmig umgeben, sich also auf gleicher axialer Höhe im Behälter befinden wie jeweils ein diesen zugeordneter Plattenwärmetauscher, benötigen mehr Raum und sind daher in dem unter der Querschnittsverengung gelegenen Bereich des Konverters angeordnet, in dem der Konverter einen größeren Querschnitt aufweist.

Nachfolgend wird die vorliegende Erfindung anhand eines Ausführungsbeispiels unter Bezugnahme auf die beiliegende Zeichnung näher erläutert. Dabei zeigt:

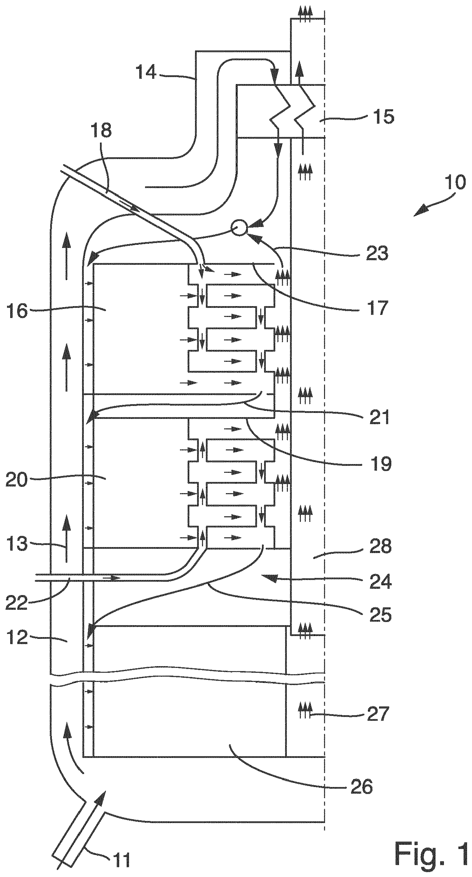

Figur 1 eine schematisch vereinfachte Darstellung eines Längsschnitts durch eine Hälfte eines erfindungsgemäßen Ammoniaksynthesekonverters.

Nachfolgend wird zunächst unter Bezugnahme auf Figur 1 der grundsätzliche Aufbau eines erfindungsgemäßen Ammoniaksynthesekonverters erläutert, welcher insgesamt mit dem Bezugszeichen 10 benannt ist. In der Zeichnung gemäß Figur 1 ist im Wesentlichen nur die linke Hälfte des Ammoniaksynthesekonverters 10 dargestellt. Diese umfasst einen Druckbehälter, in welchen über einen Einlass 11 im unteren Bereich des Druckbehälters ein Hauptstrom der Eduktgase Stickstoff und Wasserstoff eingeleitet werden, welche in dem Ammoniaksynthesekonverter nach dem Haber-Bosch-Verfahren zu Ammoniakgas umgesetzt werden. Dieser Hauptstrom der Eduktgase strömt in dem Druckbehälter zunächst in einem radial außen liegenden Kanal 12 in Richtung der Pfeile 13 nach oben hin. In seinem obersten Abschnitt weist der Ammoniaksynthesekonverter 10 einen verjüngten Kopfbereich 14 auf, welcher gegenüber dem gesamten darunter liegenden Bereich einen reduzierten Durchmesser aufweist. In diesem verjüngten Kopfbereich 14 ist ein dritter Plattenwärmetauscher 15 angeordnet, den das einströmende kalte Eduktgas von oben nach unten hin durchströmt, wobei der Eduktgasstrom durch im Gegenstrom durch diesen Plattenwärmetauscher 15 strömendes austretendes heißes Produktgas vorgewärmt wird. Der vorgewärmte Eduktgasstrom strömt dann nach Richtungsumkehr von oben nach unten in das Innere des Ammoniaksynthesekonverters ein, wobei der Eduktgasstrom im oberen Bereich zunächst nach radial außen geleitet wird, um dann in ein erstes Katalysatorbett 16 einzutreten. Dieses erste Katalysatorbett 16 durchströmt der Eduktgasstrom von radial außen nach radial innen hin. In diesem Katalysatorbett findet die Umsetzung der Eduktgase Stickstoff und Wasserstoff zu Ammoniakgas statt, wobei in der Regel keine vollständige Umsetzung erfolgt, so dass der entstehende Produktgasstrom auch noch Anteile der Eduktgase enthält.

Nach dem Durchströmen des ersten Katalysatorbetts 16 in etwa horizontaler Strömung von radial außen nach radial innen tritt der aufgrund der exothermen Reaktion erwärmte Prozessgasstrom in einen ersten Plattenwärmetauscher 17 ein, wo eine Abkühlung erfolgt durch einen kühlenden Gasstrom, welcher im Gleichstrom (oder ggf. alternativ im Gegenstrom) zu dem Prozessgasstrom den ersten Plattenwärmetauscher durchströmt. Bei diesem kühlenden Gasstrom handelt es sich um einen von außen zugeführten Teilstrom an Eduktgasen, welcher über eine Zuleitung 18 dem ersten Plattenwärmetauscher 17 zugeführt wird. Das Volumen dieses Teilstroms im Verhältnis zu dem Hauptgasstrom, der über den unteren Einlass 11 in den Ammoniaksynthesekonverter gelangt, kann je nach Bedarf variieren. Beispielsweise handelt es sich bei dem Teilstrom durch die Zuleitung 18 um einen prozentual geringeren Anteil der insgesamt dem Ammoniaksynthesekonverter 10 zugeführten Eduktgase. Dies muss aber keineswegs so sein. Ein Vorteil der vorliegenden Erfindung liegt aber darin, dass dieser zweite, gegebenenfalls geringere Teilstrom auch an der Reaktion im ersten Katalysatorbett 16 teilnimmt. Dies wird dadurch erreicht, dass man diesen Teilstrom nach dem Durchleiten durch den ersten Plattenwärmetauscher 17 radial innen in Richtung der Pfeile in etwa axialer Strömung nach oben führt, dann über dem ersten Plattenwärmetauscher 17 mit dem von oben her eintretenden Hauptgasstrom der Eduktgase vermischt und radial nach außen leitet, wo der entstandene Gesamtstrom von radial außen her das erste Katalysatorbett 16 durchströmt. Durch diese Maßnahme wird zum einen eine höhere Ausbeute an Produktgas erzielt und gleichzeitig wird eine Kühlung des durch die Reaktion in dem ersten Katalysatorbett 16 entstandenen Prozessgases erreicht.

Der erste Plattenwärmetauscher 17 ist konzentrisch innen zu dem ersten Katalysatorbett 16 angeordnet, so dass er von dem ringförmigen ersten Katalysatorbett ringförmig umgeben wird. Bei den in dem erfindungsgemäßen Ammoniaksynthesekonverter 10 verwendeten Plattenwärmetauschern handelt es sich um besonders platzsparende Konstruktionen mit direkter seitlicher Einströmung des heißen Gases, die das gesamte zur Verfügung stehende Volumen im Behälter ausfüllen und die eine hohe spezifische Wärmeübertragungsleistung aufweisen. Unterhalb des ersten Plattenwärmetauschers 17 ist ein entsprechend konstruierter zweiter Plattenwärmetauscher 19 angeordnet. Weiterhin befindet sich unterhalb des ersten Katalysatorbetts 16 in dem Ammoniaksynthesekonverter 10 ein zweites Katalysatorbett 20, welches wiederum den zweiten Plattenwärmetauscher 19 außen ringförmig konzentrisch umgibt.

Das Prozessgas verlässt nach der Reaktion im ersten Katalysatorbett 16 und nach dem Durchströmen den ersten Plattenwärmetauscher 17 nach unten hin und strömt dann oberhalb des zweiten Katalysatorbetts 20 in Richtung des Pfeils 21 radial nach außen hin und tritt danach von radial außen her in das zweite Katalysatorbett 20 ein, in dem erneut eine Reaktion zu Ammoniakgas auftritt. Nach dem Durchströmen des zweiten Katalysatorbetts 20 gelangt der erwärmte Prozessgasstrom von radial außen her in den zweiten Plattenwärmetauscher 19 und durchströmt diesen nach radial innen hin in einer etwa horizontalen Strömung, wobei eine Abkühlung des zuvor durch die Reaktion erwärmten Prozessgases stattfindet. Zur Kühlung in diesem zweiten Plattenwärmetauscher 19 wird ein weiterer kühler Teilgasstrom von Eduktgas verwendet, welcher über eine Zuleitung 22 von außen her in den Ammoniaksynthesekonverter einströmt und dann an der Unterseite in den zweiten Plattenwärmetauscher 19 zunächst vertikal einströmt und dann nach Umlenkung horizontal diesen zweiten Plattenwärmetauscher 19 im Gleichstrom (oder ggf. alternativ im Gegenstrom) zu dem heißen Prozessgas aus dem zweiten Katalysatorbett 20 durchströmt und dann radial innenseitig in etwa axialer Richtung an dem zweiten Plattenwärmetauscher 19 und an dem ersten Plattenwärmetauscher 17 entlang nach oben hin strömt.

Hier erkennt man einen weiteren Vorteil der erfindungsgemäßen Strömungsführung der Teilströme, da der kühlende Teilstrom aus der Zuleitung 22, der durch den zweiten Plattenwärmetauscher 19 strömt, axial im mittigen Bereich des Konverters nach oben strömt und dann direkt durch die Ports des ersten Plattenwärmetauschers 17 strömt und sich mit dem den ersten Plattenwärmetauscher verlassenden Teilstrom aus der Zuleitung 18 vermischt. Dieser vereinigte Prozessgasstrom strömt oberhalb des ersten Plattenwärmetauschers 17 in Richtung des Pfeils 23 nach radial außen und vermischt sich dann mit dem von oben her zuströmenden Hauptstrom des Eduktgases, so dass alle drei Teilströme nach Vereinigung anschließend das erste Katalysatorbett 16 von außen nach innen durchströmen und an der Reaktion im ersten Katalysatorbett 16 teilnehmen. Auch der Teilstrom, der durch die Zuleitung 22 eintritt, erfüllt somit eine zusätzliche Funktion, nämlich die Kühlung der heißen Prozessgase im zweiten Plattenwärmetauscher 19 nach der Reaktion im zweiten Katalysatorbett 20. Dennoch geht auch dieser Teilstrom bei der Umsetzung zu Ammoniakgas nicht verloren, sondern nimmt an der Reaktion in allen drei Katalysatorbetten teil, wodurch die Ausbeute der Reaktion insgesamt weiter erhöht wird.

Der Prozessgasstrom, der nach der Reaktion im zweiten Katalysatorbett 20 aus dem zweiten Plattenwärmetauscher 19 vertikal nach unten hin ausströmt, strömt dann in einem Zwischenraum 24 in Richtung des Pfeils 25 radial nach außen und tritt dann von außen her in ein drittes Katalysatorbett 26 ein, um dieses dann nach radial innen hin zu durchströmen. Dieses dritte Katalysatorbett 26 ist im unteren Bereich des Druckbehälters angeordnet und somit unterhalb des zweiten Katalysatorbetts 20, wobei sich jedoch das dritte Katalysatorbett 26 anders als das zweite Katalysatorbett 20 ringförmig weiter nach radial innen hin erstreckt, da innenseitig zu diesem kein Plattenwärmetauscher angeordnet ist. Nach dem Durchströmen des dritten Katalysatorbetts 26 tritt das Produktgas an diesem radial innenseitig aus und strömt dann in Richtung der Pfeile 27 axial nach oben hin, um dann in einem mittig axial im Ammoniaksynthesekonverter angeordneten Strömungskanal 28 vertikal nach oben hin zu strömen. Im oberen Endbereich des Ammoniaksynthesekonverters 10 durchströmt das heiße Produktgas dann etwa vertikal von unten nach oben den dritten Plattenwärmetauscher 15, der sich in dem verjüngten Kopfbereich 14 des Ammoniaksynthesekonverters 10 befindet. Somit strömt dieses heiße Produktgas bevor es den Druckbehälter verlässt in dem dritten Plattenwärmetauscher im Gegenstrom zu dem in den Druckbehälter einströmenden kalten Hauptstrom des Eduktgases und erwärmt diesen.

### Bezuaszeichenliste

- 10: Ammoniaksynthesekonverter
- 11: Einlass unten
- 12: Kanal
- 13: Pfeile
- 14: verjüngter Kopfbereich
- 15: dritter Plattenwärmetauscher
- 16: erstes Katalysatorbett
- 17: erster Plattenwärmetauscher
- 18: Zuleitung
- 19: zweiter Plattenwärmetauscher
- 20: zweites Katalysatorbett
- 21: Pfeil
- 22: Zuleitung
- 23: Pfeil
- 24: Zwischenraum
- 25: Pfeil
- 26: drittes Katalysatorbett
- 27: Pfeil
- 28: mittiger Strömungskanal

## Patentansprüche

1. Verfahren zur Herstellung von Ammoniak in einem Ammoniaksynthesekonverter (10), bei dem man einen Eduktgasstrom zunächst durch ein erstes Katalysatorbett (16) leitet, in dem eine Reaktion der Eduktgase stattfindet, wobei dem ersten Katalysatorbett ein Wärmetauscher (17) zugeordnet ist und man danach den Prozessgasstrom durch ein zweites Katalysatorbett (20) leitet, in dem eine weitere Reaktion der Eduktgase stattfindet, wobei dem zweiten Katalysatorbett ein weiterer Wärmetauscher (19) zugeordnet ist, wobei man den Eduktgasstrom dem Ammoniaksynthesekonverter in mindestens zwei Teilströmen über voneinander getrennte Einlässe zuführt, um die Temperatur der Prozessgasströme im Ammoniaksynthesekonverter zu beeinflussen und wobei man mindestens einen Teilstrom der Eduktgase als Kühlmedium durch einen der Wärmetauscher strömen lässt, um einen indirekten Wärmetausch mit einem den Wärmetauscher durchströmenden durch die Reaktion aufgeheizten Prozessgasstrom zu bewirken, bevor dieser Teilstrom mit einem anderen oder ggf. mehreren anderen Teilströmen der Eduktgase vereinigt wird, wobei man den aus dem Wärmetauscher (19) nach dem zweiten Katalysatorbett (20) ausströmenden Prozessgasstrom anschließend durch ein drittes Katalysatorbett (26) leitet, wobei man einen zweiten Eduktgasstrom, welcher einen zweiten Teilstrom der Eduktgase darstellt, durch einen zweiten Einlass (22) dem Ammoniaksynthesekonverter (10) zuführt, dann im Ammoniaksynthesekonverter als Kühlmittel durch den zweiten Wärmetauscher (19) leitet und vorwärmt und dann dem ersten Katalysatorbett (16) zuführt, **dadurch gekennzeichnet, dass** man einen dritten Eduktgasstrom, welcher einen dritten Teilstrom der Eduktgase darstellt, in einem oberen Bereich durch einen dritten Einlass (18) dem Ammoniaksynthesekonverter (10) zuführt, dann im Ammoniaksynthesekonverter als Kühlmittel durch den ersten Wärmetauscher (17) leitet und vorwärmt und dann dem ersten Katalysatorbett (16) zuführt, wobei man einen Eduktgasstrom in einem dritten Wärmetauscher (15) vorwärmt, bevor der Eduktgasstrom durch das erste Katalysatorbett (16) geleitet wird und wobei der dritte Wärmetauscher (15) als Plattenwärmetauscher ausgebildet ist.

2. Verfahren zur Herstellung von Ammoniak in einem Ammoniaksynthesekonverter nach Anspruch 1, **dadurch gekennzeichnet, dass** der Prozessgasstrom zunächst das erste Katalysatorbett (16) im Wesentlichen in radialer Richtung vollständig durchströmt und danach einen diesem Katalysatorbett zugeordneten ersten Wärmetauscher (17) durchströmt.

3. Verfahren zur Herstellung von Ammoniak in einem Ammoniaksynthesekonverter nach Anspruch 2, **dadurch gekennzeichnet, dass** der Prozessgasstrom in den ersten Wärmetauscher (17) im Wesentlichen in radialer Richtung einströmt und in axialer Richtung aus dem ersten Wärmetauscher (17) ausströmt.

4. Verfahren zur Herstellung von Ammoniak in einem Ammoniaksynthesekonverter nach einem der Ansprüche 1 bis 3, **dadurch gekennzeichnet, dass** der Prozessgasstrom zunächst das zweite Katalysatorbett (20) im Wesentlichen in radialer Richtung vollständig durchströmt und danach einen diesem Katalysatorbett zugeordneten zweiten Wärmetauscher (19) durchströmt.

5. Verfahren zur Herstellung von Ammoniak in einem Ammoniaksynthesekonverter nach einem der Ansprüche 1 bis 4, **dadurch gekennzeichnet, dass** der Prozessgasstrom in den zweiten Wärmetauscher (19) im Wesentlichen in radialer Richtung einströmt und in axialer Richtung aus dem zweiten Wärmetauscher (19) ausströmt.

6. Verfahren nach einem der Ansprüche 1 bis 5, **dadurch gekennzeichnet, dass** der Prozessgasstrom zunächst ein erstes Katalysatorbett (16) im Wesentlichen radial durchströmt, nach Austritt aus dem ersten Katalysatorbett (16) seitlich in einen ersten Wärmetauscher (17) einströmt, das Prozessgas danach ein zweites Katalysatorbett (20) im Wesentlichen radial durchströmt, nach Austritt aus dem zweiten Katalysatorbett (20) seitlich in einen zweiten Wärmetauscher (19) einströmt, das Prozessgas danach ein drittes Katalysatorbett (26) im Wesentlichen radial durchströmt und das Prozessgas nach Austritt aus dem dritten Katalysatorbett (26) einen als Plattenwärmetauscher ausgebildeten dritten Wärmetauscher (15) durchströmt, welcher im oberen Bereich des Druckbehälters, insbesondere in einem im Durchmesser verjüngten Kopfbereich des Druckbehälters, oberhalb des ersten Katalysatorbetts (16) angeordnet ist.

7. Verfahren zur Herstellung von Ammoniak in einem Ammoniaksynthesekonverter nach einem der Ansprüche 1 bis 6, **dadurch gekennzeichnet, dass** man einen ersten Eduktgasstrom, welcher einen ersten Teilstrom der Eduktgase darstellt, in einem unteren Bereich durch einen ersten Einlass (11) dem Ammoniaksynthesekonverter (10) zuführt, dann im Ammoniaksynthesekonverter in einem radial äußeren Bereich nach oben führt, dann durch den dritten Wärmetauscher (15) leitet und vorwärmt und dann dem ersten Katalysatorbett (16) zuführt.

8. Verfahren nach Anspruch 7, **dadurch gekennzeichnet, dass** man alle drei Teilströme der Eduktgase erst durch das erste Katalysatorbett (16), danach durch das zweite Katalysatorbett (20) und danach durch das dritte Katalysatorbett (26) leitet.

9. Verfahren nach einem der Ansprüche 1 bis 8, **dadurch gekennzeichnet, dass** man einen Teilgasstrom, den man als Kühlmittel durch den zweiten Wärmetauscher (19) leitet, anschließend durch die Austrittsports des Wärmetauschfluids des ersten Wärmetauschers (17) leitet und mit dem Strom des austretenden Wärmetauschfluids des ersten Wärmtauschers (17) vereint.

10. Ammoniaksynthesekonverter umfassend einen Druckbehälter, ein erstes Katalysatorbett in diesem Druckbehälter sowie wenigstens einen ersten diesem Katalysatorbett zugeordneten Wärmetauscher im Bereich zwischen dem ersten Katalysatorbett und einer Innenwand des Druckbehälters, weiterhin umfassend ein zweites Katalysatorbett in diesem Druckbehälter sowie wenigstens einen zweiten diesem Katalysatorbett zugeordneten Wärmetauscher im Bereich zwischen dem zweiten Katalysatorbett und einer Innenwand des Druckbehälters, , wobei wenigstens ein dritter Wärmetauscher vorgesehen ist, welcher in Strömungsrichtung des in den Druckbehälter einströmenden Eduktgasstroms gesehen dem ersten Katalysatorbett vorgeschaltet ist, wobei der Ammoniaksynthesekonverter ein drittes Katalysatorbett (26) umfasst, welches im Strömungsweg des Prozessgasstroms dem zweiten Katalysatorbett (20) und dem zweiten Wärmetauscher (19) nachgeschaltet ist, wobei der Einlass (11) für den Eduktgasstrom im unteren Bereich des Druckbehälters angeordnet ist, **dadurch gekennzeichnet, dass** das erste und das zweite Katalysatorbett ringförmig ausgebildet sind, dass der erste und der zweite Wärmetauscher jeweils als Plattenwärmetauscher ausgebildet sind und der dritte Wärmetauscher (15) als Plattenwärmetauscher ausgebildet ist und der dritte Wärmetauscher (15) im oberen Bereich des Druckbehälters oberhalb des ersten Katalysatorbetts (16) angeordnet ist.

11. Ammoniaksynthesekonverter nach Anspruch 10, **dadurch gekennzeichnet, dass** das zweite Katalysatorbett (20) im Druckbehälter unterhalb des ersten Katalysatorbetts (16) angeordnet ist und das dritte Katalysatorbett (26) unterhalb des zweiten Katalysatorbetts (20) und im unteren Bereich des Behälters angeordnet ist.

12. Ammoniaksynthesekonverter nach einem der Ansprüche 10 oder 11, **dadurch gekennzeichnet, dass** eine axiale mittige Rohrleitung (28) oder ein axiales mittiges Rohrleitungssystem im Behälter angeordnet ist, in welches der Produktgasstrom nach Durchtritt durch das dritte Katalysatorbett (26) von unten her einströmt und welches einen Auslass für einen Produktgasstrom im oberen Bereich des Behälters aufweist.

13. Ammoniaksynthesekonverter nach Anspruch 12, **dadurch gekennzeichnet, dass** die axiale mittige Rohrleitung (28) für den Produktgasstrom in ihrem Ausströmbereich durch den dritten Wärmetauscher (15) hindurchgeführt ist.

14. Ammoniaksynthesekonverter nach einem der Ansprüche 10 bis 13, **dadurch gekennzeichnet, dass** der dritte Wärmetauscher (15) in einem oberen im Querschnitt verengten Bereich des Druckbehälters angeordnet ist.

15. Ammoniaksynthesekonverter nach einem der Ansprüche 10 bis 14, **dadurch gekennzeichnet, dass** sich das dritte Katalysatorbett (26) sich in radialer Ausdehnung weiter zur Mitte des Behälters hin erstreckt als das erste Katalysatorbett (16) und/oder das zweite Katalysatorbett (20).

## Claims

1. Process for producing ammonia in an ammonia synthesis converter (10), wherein a reactant gas stream is initially passed through a first catalyst bed (16) in which a reaction of the reactant gases takes place, wherein the first catalyst bed has a heat exchanger (17) assigned to it and the process gas stream is subsequently passed through a second catalyst bed (20) in which a further reaction of the reactant gases takes place, wherein the second catalyst bed has a further heat exchanger (19) assigned to it, wherein the reactant gas stream is supplied to the ammonia synthesis converter in at least two substreams via separate inlets to influence the temperature of the process gas streams in the ammonia synthesis converter and wherein at least one substream of the reactant gases is passed as cooling medium through one of the heat exchangers to effect indirect heat exchange with a process gas stream heated by the reaction flowing through the heat exchanger before this substream is combined with one other or optionally two or more other substreams of the reactant gases, wherein the process gas stream flowing out of the heat exchanger (19) after the second catalyst bed (20) is subsequently passed through a third catalyst bed (26), wherein a second reactant gas stream which constitutes a second substream of the reactant gases is supplied to the ammonia synthesis converter (10) via a second inlet (22), then passed as coolant through the second heat exchanger (19) in the ammonia synthesis converter and preheated and then supplied to the first catalyst bed (16), **characterized in that** a third reactant gas stream which constitutes a third substream of the reactant gases is supplied to the ammonia synthesis converter (10) in an upper region via a third inlet (18), then passed as coolant through the first heat exchanger (17) in the ammonia synthesis converter and preheated and then supplied to the first catalyst bed (16), wherein a reactant gas stream is preheated in a third heat exchanger (15) before the reactant gas stream is passed through the first catalyst bed (16) and wherein the third heat exchanger (15) is in the form of a plate heat exchanger.

2. Process for producing ammonia in an ammonia synthesis converter according to Claim 1, **characterized in that** the process gas stream initially flows entirely through the first catalyst bed (16) substantially in a radial direction and subsequently flows through a first heat exchanger (17) assigned to this catalyst bed.

3. Process for producing ammonia in an ammonia synthesis converter according to Claim 2, **characterized in that** the process gas stream flows into the first heat exchanger (17) substantially in a radial direction and flows out of the first heat exchanger (17) in an axial direction.

4. Process for producing ammonia in an ammonia synthesis converter according to any of Claims 1 to 3, **characterized in that** the process gas stream initially flows entirely through the second catalyst bed (20) substantially in a radial direction and subsequently flows through a second heat exchanger (19) assigned to this catalyst bed.

5. Process for producing ammonia in an ammonia synthesis converter according to any of Claims 1 to 4, **characterized in that** the process gas stream flows into the second heat exchanger (19) substantially in a radial direction and flows out of the second heat exchanger (19) in an axial direction.

6. Process according to any of Claims 1 to 5, **characterized in that** the process gas stream initially flows through a first catalyst bed (16) in a substantially radial direction, after exiting the first catalyst bed (16) flows laterally into a first heat exchanger (17), the process gas subsequently passes through a second catalyst bed (20) in a substantially radial direction, after exiting the second catalyst bed (20) flows laterally into a second heat exchanger (19), the process gas subsequently flows through a third catalyst bed (26) in a substantially radial direction and after exiting the third catalyst bed (26) flows through a third heat exchanger (15) in the form of a plate heat exchanger which is arranged in the upper region of the pressure vessel, in particular in a reduced diameter top region of the pressure vessel above the first catalyst bed (16).

7. Process for producing ammonia in an ammonia synthesis converter according to any of Claims 1 to 6, **characterized in that** a first reactant gas stream which constitutes a first substream of the reactant gases is supplied to the ammonia synthesis converter (10) in a lower region via a first inlet (11), then passed upward in the ammonia synthesis converter in a radially outward region, then passed through the third heat exchanger (15) and preheated and then supplied to the first catalyst bed (16).

8. Process according to Claim 7, **characterized in that** all three substreams of the reactant gases are first passed through the first catalyst bed (16), then passed through the second catalyst bed (20) and subsequently passed through the third catalyst bed (26) .

9. Process according to any of Claims 1 to 8, **characterized in that** a partial gas stream which is passed as coolant through the second heat exchanger (19) is subsequently passed through the exit ports of the heat exchange fluid of the first heat exchanger (17) and combined with the stream of the exiting heat exchange fluid of the first heat exchanger (17).

10. Ammonia synthesis converter comprising a pressure vessel, a first catalyst bed in this pressure vessel and at least one first heat exchanger assigned to this catalyst bed in the region between the first catalyst bed and an inner wall of the pressure vessel, further comprising a second catalyst bed in this pressure vessel and at least one second heat exchanger assigned to this catalyst bed in the region between the second catalyst bed and an inner wall of the pressure vessel, wherein at least one third heat exchanger which is arranged upstream of the first catalyst bed in the flow direction of the reactant gas stream flowing into the pressure vessel is provided, wherein the ammonia synthesis converter comprises a third catalyst bed (26) which is arranged downstream of the second catalyst bed (20) and the second heat exchanger (19) in the flow path of the process gas stream, wherein the inlet (11) for the reactant gas stream is arranged in the lower region of the pressure vessel, **characterized in that** the first and the second catalyst bed are annular, **in that** the first and the second heat exchanger are each in the form of a plate heat exchanger and the third heat exchanger (15) is in the form of a plate heat exchanger and the third heat exchanger (15) is arranged in the upper region of the pressure vessel above the first catalyst bed (16).

11. Ammonia synthesis converter according to Claim 10, **characterized in that** the second catalyst bed (20) is arranged in the pressure vessel below the first catalyst bed (16) and the third catalyst bed (26) is arranged below the second catalyst bed (20) and in the lower region of the vessel.

12. Ammonia synthesis converter according to either of Claims 10 or 11, **characterized in that** an axial central pipeline (28) or an axial central pipeline system into which the product gas stream flows from below after flowing through the third catalyst bed (26) and which comprises an outlet for a product gas stream in the upper region of the vessel is arranged in the vessel.

13. Ammonia synthesis converter according to Claim 12, **characterized in that** in its outflow region the axial central pipeline (28) for the product gas stream passes through the third heat exchanger (15).

14. Ammonia synthesis converter according to any of Claims 10 to 13, **characterized in that** the third heat exchanger (15) is arranged in an upper reduced cross section region of the pressure vessel.

15. Ammonia synthesis converter according to any of Claims 10 to 14, **characterized in that** the third catalyst bed (26) extends further to the centre of the vessel in radial extent than the first catalyst bed (16) and/or the second catalyst bed (20).

## Revendications

1. Procédé pour la préparation d'ammoniac dans un convertisseur de synthèse d'ammoniac (10), dans lequel on guide un flux gazeux de départ d'abord à travers un premier lit catalytique (16), dans lequel se produit une réaction des gaz de départ, un échangeur thermique (17) étant associé au premier lit catalytique, et on guide le flux gazeux de procédé ensuite à travers un deuxième lit catalytique (20), dans lequel se produit une autre réaction des gaz de départ, un autre échangeur thermique (19) étant associé au deuxième lit catalytique, le flux gazeux de départ étant introduit dans le convertisseur de synthèse d'ammoniac en au moins deux flux partiels via des entrées séparées l'une de l'autre, pour influencer la température des flux gazeux de procédé dans le convertisseur de synthèse d'ammoniac et au moins un flux partiel des gaz de départ s'écoulant comme milieu de refroidissement à travers un des échangeurs thermiques, pour provoquer un échange thermique indirect avec un flux gazeux de procédé s'écoulant à travers l'échangeur thermique, chauffé par la réaction, avant que ce flux partiel ne soit réuni avec un autre ou, le cas échéant, plusieurs autres flux partiels des gaz de départ, le flux gazeux de procédé qui s'écoule hors de l'échangeur thermique (19) en aval du deuxième lit catalytique (20) étant ensuite guidé à travers un troisième lit catalytique (26), un deuxième flux gazeux de départ, qui représente un deuxième flux partiel des gaz de départ, étant introduit dans le convertisseur de synthèse d'ammoniac (10) à travers une deuxième entrée (22), étant ensuite guidé dans le convertisseur de synthèse d'ammoniac et y étant préchauffé en tant qu'agent de refroidissement à travers le deuxième échangeur thermique (19) et étant ensuite introduit dans le premier lit catalytique (16), **caractérisé en ce qu'**on introduit un troisième flux gazeux de départ, qui représente un troisième flux partiel des gaz de départ, dans le convertisseur de synthèse d'ammoniac (10) dans une partie supérieure à travers une troisième entrée (18), on le guide ensuite dans le convertisseur de synthèse d'ammoniac et on l'y préchauffe en tant qu'agent de refroidissement à travers le premier échangeur thermique (17) et on l'introduit ensuite dans le premier lit catalytique (16), un flux gazeux de départ étant préchauffé dans un troisième échangeur thermique (15) avant que le flux gazeux de départ ne soit guidé à travers le premier lit catalytique (16) et le troisième échangeur thermique (15) étant conçu sous forme d'échangeur thermique à plaques.

2. Procédé pour la préparation d'ammoniac dans un convertisseur de synthèse d'ammoniac selon la revendication 1, **caractérisé en ce que** le flux gazeux de procédé s'écoule d'abord complètement à travers le premier lit catalytique (16), essentiellement dans la direction radiale, et s'écoule ensuite à travers un premier échangeur thermique (17) associé à ce lit catalytique.

3. Procédé pour la préparation d'ammoniac dans un convertisseur de synthèse d'ammoniac selon la revendication 2, **caractérisé en ce que** le flux gazeux de procédé s'écoule essentiellement dans la direction radiale dans le premier échangeur thermique (17) et s'écoule essentiellement dans la direction axiale hors du premier échangeur thermique (17).

4. Procédé pour la préparation d'ammoniac dans un convertisseur de synthèse d'ammoniac selon l'une quelconque des revendications 1 à 3, **caractérisé en ce que** le flux gazeux de procédé s'écoule d'abord complètement à travers le deuxième lit catalytique (20), essentiellement dans la direction radiale, et s'écoule ensuite à travers un deuxième échangeur thermique (19) associé à ce lit catalytique.

5. Procédé pour la préparation d'ammoniac dans un convertisseur de synthèse d'ammoniac selon l'une quelconque des revendications 1 à 4, **caractérisé en ce que** le flux gazeux de procédé s'écoule essentiellement dans la direction radiale dans le deuxième échangeur thermique (19) et s'écoule essentiellement dans la direction axiale hors du deuxième échangeur thermique (19) .

6. Procédé selon l'une quelconque des revendications 1 à 5, **caractérisé en ce que** le flux gazeux de procédé s'écoule d'abord à travers un premier lit catalytique (16), essentiellement dans la direction radiale, s'écoule latéralement, après la sortie du premier lit catalytique (16), dans un premier échangeur thermique (17), le gaz de procédé s'écoule ensuite à travers un deuxième lit catalytique (20), essentiellement dans la direction radiale, s'écoule latéralement, après la sortie du deuxième lit catalytique (20), dans un deuxième échangeur thermique (19), le gaz de procédé s'écoule ensuite à travers un troisième lit catalytique (26), essentiellement dans la direction radiale, et le gaz de procédé s'écoule, après la sortie du troisième lit catalytique (26), à travers un troisième échangeur thermique (15) conçu sous forme d'échangeur thermique à plaques, qui est disposé dans la partie supérieure du récipient sous pression, en particulier dans une zone de tête du récipient sous pression dont le diamètre se rétrécit, au-dessus du premier lit catalytique (16).

7. Procédé pour la préparation d'ammoniac dans un convertisseur de synthèse d'ammoniac selon l'une quelconque des revendications 1 à 6, **caractérisé en ce qu'**on introduit un premier flux gazeux de départ, qui représente un premier flux partiel des gaz de départ, dans une partie inférieure à travers une première entrée (11) dans le convertisseur de synthèse d'ammoniac (10), puis on le guide dans le convertisseur de synthèse d'ammoniac vers le haut dans une zone radialement externe, puis on le guide à travers le troisième échangeur thermique (15) et on l'y préchauffe puis on l'introduit dans le premier lit catalytique (16).

8. Procédé selon la revendication 7, **caractérisé en ce qu'**on guide les trois flux partiels des gaz de départ d'abord à travers le premier lit catalytique (16), puis à travers le deuxième lit catalytique (20) puis à travers le troisième lit catalytique (26).

9. Procédé selon l'une quelconque des revendications 1 à 8, **caractérisé en ce qu'**on guide un flux gazeux partiel, qu'on guide en tant qu'agent de refroidissement à travers le deuxième lit catalytique (19), ensuite à travers l'orifice de sortie du fluide caloporteur du premier échangeur thermique (17) et on le réunit avec le flux du fluide caloporteur sortant du premier échangeur thermique (17).

10. Convertisseur de synthèse d'ammoniac comprenant un récipient sous pression, un premier lit catalytique dans ce récipient sous pression ainsi qu'au moins un premier échangeur thermique associé à ce lit catalytique dans une zone entre le premier lit catalytique et une paroi interne du récipient sous pression, comprenant en outre un deuxième lit catalytique dans ce récipient sous pression ainsi qu'au moins un deuxième échangeur thermique associé à ce lit catalytique dans la zone entre le deuxième lit catalytique et une paroi interne du récipient sous pression, au moins un troisième échangeur thermique étant utilisé, qui est disposé, vu dans le sens d'écoulement du flux gazeux de départ s'écoulant dans le récipient sous pression, en amont du premier lit catalytique, le convertisseur de synthèse d'ammoniac comprenant un troisième lit catalytique (26) qui, dans la voie d'écoulement du flux gazeux de procédé, est disposé en aval du deuxième lit catalytique (20) et du deuxième échangeur thermique (19), l'entrée (11) pour le flux gazeux de départ étant disposée dans la zone inférieure du récipient sous pression, **caractérisé en ce que** le premier et le deuxième lit catalytique sont conçus sous forme annulaire, **en ce que** le premier et le deuxième échangeur thermique sont à chaque fois conçus sous forme d'échangeur thermique à plaques et le troisième échangeur thermique (15) est conçu sous forme d'échangeur thermique à plaques et le troisième échangeur thermique (15) est disposé dans la zone supérieure du récipient sous pression au-dessus du premier lit catalytique (16).

11. Convertisseur de synthèse d'ammoniac selon la revendication 10, **caractérisé en ce que** le deuxième lit catalytique (20) est disposé dans le récipient sous pression sous le premier lit catalytique (16) et le troisième lit catalytique (26) est disposé sous le deuxième lit catalytique (20) et dans la zone inférieure du récipient.

12. Convertisseur de synthèse d'ammoniaque selon l'une quelconque des revendications 10 ou 11, **caractérisé en ce qu'**une conduite tubulaire centrale axiale (28) ou un système de conduite tubulaire centrale axiale est disposé(e) dans le récipient, dans laquelle/lequel le flux gazeux produit s'écoule à partir du bas après le passage à travers le troisième lit catalytique (26) et qui présente une sortie pour un flux gazeux produit dans la partie supérieure du récipient.

13. Convertisseur de synthèse d'ammoniac selon la revendication 12, **caractérisé en ce que** la conduite tubulaire centrale axiale (28) pour le flux gazeux produit est guidée, dans sa zone d'écoulement de sortie, à travers le troisième échangeur thermique (15).

14. Convertisseur de synthèse d'ammoniaque selon l'une quelconque des revendications 10 à 13, **caractérisé en ce que** le troisième échangeur thermique (15) est disposé dans une zone supérieure de section transversale réduite du récipient sous pression.

15. Convertisseur de synthèse d'ammoniaque selon l'une quelconque des revendications 10 à 14, **caractérisé en ce que** le troisième lit catalytique (26) s'étend, dans sa dimension radiale, plus loin vers le centre du récipient que le premier lit catalytique (16) et/ou que le deuxième lit catalytique (20).
